(19) Europäisches Patentamt / European Patent Office / Office européen des brevets

(11) **EP 4 220 801 A1**

(12) **EUROPEAN PATENT APPLICATION**
published in accordance with Art. 153(4) EPC

(43) Date of publication:
**02.08.2023 Bulletin 2023/31**

(21) Application number: **21873019.0**

(22) Date of filing: **28.09.2021**

(51) International Patent Classification (IPC):
*H01M 10/0562* [(2010.01)]     *H01M 10/052* [(2010.01)]
*C01B 25/14* [(2006.01)]

(52) Cooperative Patent Classification (CPC):
**C01B 25/14; H01M 10/052; H01M 10/0562;**
Y02E 60/10

(86) International application number:
**PCT/KR2021/013256**

(87) International publication number:
**WO 2022/065991 (31.03.2022 Gazette 2022/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 28.09.2020 KR 20200126177
21.06.2021 KR 20210080338

(71) Applicant: **POSCO JK SOLID SOLUTION CO., LTD.
Yangsan-si, Gyeongsangnam-do 50583 (KR)**

(72) Inventors:
• **KIM, Tae Heung
  Busan 46230 (KR)**
• **YOON, Duck Ki
  Busan 48039 (KR)**
• **LIM, Hyung Sik
  Busan 47863 (KR)**

(74) Representative: **Jacobi, Markus Alexander
Patentanwälte
Isenbruck Bösl Hörschler PartG mbB
Eastsite One
Seckenheimer Landstrasse 4
68163 Mannheim (DE)**

(54) **SULFIDE-BASED SOLID ELECTROLYTE FOR ALL-SOLID LITHIUM SECONDARY BATTERY AND METHOD FOR PREPARING SULFIDE-BASED SOLID ELECTROLYTE**

(57) The present invention relates to a sulfide-based solid electrolyte for an all-solid lithium secondary battery, and to a method for preparing the sulfide-based solid electrolyte. The present invention has an effect of providing a sulfide-based solid electrolyte that has excellent stability with respect to lithium metal and has excellent ion conductivity, while having high crystallinity. The present invention has an effect of providing a method for preparing a sulfide-based solid electrolyte that has excellent stability with respect to lithium metal and has excellent ion conductivity, while having high crystallinity even when heat-treated at a low temperature.

**Description**

[Technical Field]

The present invention relates to a sulfide-based solid electrolyte for all-solid lithium secondary batteries and a method of preparing the sulfide-based solid electrolyte, and more particularly to a crystalline sulfide-based solid electrolyte that has excellent ion conductivity, low electronic conductivity and excellent stability with respect to a lithium metal while having high crystallinity even when heat-treated at a relatively low temperature.

[Background Art]

Recently, the use of lithium secondary batteries is expanding from a power source for small mobile devices to a power source for medium and large-sized electric vehicles (xEV) and power storage systems (ESS). In particular, interest in electric vehicles, which are eco-friendly vehicles, is very high, and major automakers around the world are recognizing eco-friendly electric vehicles as a next-generation growth technology and accelerating technology development thereof.

Battery specifications required for electric vehicles may include high power density capable of rapid charging, high energy density per weight/volume, price, safety, etc. In particular, in electric vehicles which are devices that people directly board and control, securing safety during operation and accidents is the most important requirement. In the case of the Model S as a commercial model of Tesla which is a representative electric vehicle company in the United States, a number of cases where a fire broke out while driving and burned down were announced through the media. Thereby, the development of an all-solid-state battery with high safety is required.

An all-solid-state battery, which is a battery in which a liquid of an electrolyte between positive and negative electrodes of a battery is replaced with a solid, does not include flammable organic solvents, so the risk of fire or explosion is low even if an internal short circuit occurs, and the size of the battery can be reduced. In addition, it has excellent manufacturing cost and productivity, and can achieve high voltage when stacked in series within a cell. Further, since ions other than Li ions in such a solid electrolyte do not move, side reactions due to the movement of anions do not occur, leading to improvements in safety and durability. Such an all-solid-state battery can increase safety compared to existing lithium secondary batteries.

However, since an electrolyte, in which lithium ions move, of an all-solid-state battery is solid, the all-solid-state battery has lower ionic conductivity compared to the case where a liquid electrolyte is used, resulting in low output and short lifespan. Thereby, the global industry has begun to search for electrolyte materials for all-solid-state batteries that can increase ionic conductivity as much as possible, and as a candidate, a sulfide-based solid electrolyte with excellent ionic conductivity is of great interest.

[Disclosure]

[Technical Problem]

Conventionally, an amorphous sulfide-based solid electrolyte or a crystalline sulfide-based solid electrolyte has been used as a sulfide-based solid electrolyte. Since the amorphous sulfide-based solid electrolyte does not require high crystallinity, manufacturing is possible even when a heat treatment temperature during manufacture is as low as 300°C or less, thereby reducing process costs.

However, since the amorphous sulfide-based solid electrolyte has high reactivity with a lithium metal, side reactions continuously increase during the charging/discharging of an all-solid-state battery, making it difficult to form a stable solid electrolyte film.

Thereby, efforts are being made to use a crystalline sulfide-based solid electrolyte, which can form a stable solid electrolyte film through reaction with a lithium metal, as a solid electrolyte for an all-solid-state battery.

However, a crystalline sulfide-based solid electrolyte requires heat treatment at a temperature of 500°C or higher to achieve high crystallinity. To perform heat treatment at 500°C or higher, a solid electrolyte composition stable at high temperature and complicated heat treatment equipment for preventing sulfur vacancy generated during a heat treatment process are required.

Therefore, the present invention has been made in view of the above problems, and it is one object of the present invention to provide a crystalline sulfide-based solid electrolyte having excellent stability with respect to a lithium metal while having high crystallinity even when heat-treated at a relatively low temperature. It is another object of the present invention to provide a sulfide-based solid electrolyte that has low electronic conductivity while having excellent ionic conductivity.

It will be understood that technical problems of the present invention are not limited to the aforementioned problems and other technical problems not referred to herein will be clearly understood by those skilled in the art from disclosures below.

[Technical Solution]

In accordance with an aspect of the present invention, the above and other objects can be accomplished by the provision of a sulfide-based solid electrolyte,

the sulfide-based solid electrolyte being a $Li_2S-P_2S_5-MCl-MX'$ (X' is a halogen other than Cl)-based sulfide-based solid electrolyte and
the sulfide-based solid electrolyte including lithium element (Li), sulfur element (S), phosphorus element (P) and halogen element (X),
wherein the halogen element (X) is chlorine element (Cl) and at least one halogen, other than Cl, selected from the group consisting of fluorine element (F), bromine element (Br), iodine element (I) and combinations thereof, and
a molar ratio (Li/P) of lithium element (Li) to phosphorus element (P) is 5 or more and less than 6.2, a sum of a molar ratio (S/P) of sulfur element (S) to phosphorus element (P) and a molar ratio (X/P) of halogen element (X) to phosphorus element (P) is 6 to 6.5, and a molar ratio (X/S) of halogen element (X) to sulfur element (S) is 0.25 to 0.30.

In addition, the present invention provides a sulfide-based solid electrolyte having an electronic conductivity of $1.4 \times 10^{-5}$ mS/cm or less.
In addition, the present invention provides a sulfide-based solid electrolyte including chlorine and iodine as halogens.
In accordance with another aspect of the present invention, there is provided a method of preparing a sulfide-based solid electrolyte, the method including:,

a) a step of mixing a raw material including a lithium-containing compound, a phosphorus-containing compound, and a halogen element-containing compound while grinding the same; and
b) a step of heat-treating a pulverized product, obtained by the step a), at a temperature of 450°C or higher and lower than 500°C under a vacuum or inert atmosphere.

[Advantageous effects]

The present invention provides a sulfide-based solid electrolyte that has high crystallinity, excellent stability with respect to a lithium metal, and excellent ion conductivity, but low electronic conductivity. The present invention has the effect of improving ionic conductivity and lowering electronic conductivity due to addition of a small amount of halogen compound, thereby exhibiting excellent electrochemical properties compared to existing solid electrolytes.
The present invention can provide a sulfide-based solid electrolyte having high lithium ion conductivity by performing heat treatment without addition of $H_2S$ gas at a relatively low temperature of 450°C or more and less than 500°C at which sulfur vacancy is minimized.
The present invention can provide a method of preparing a sulfide-based solid electrolyte having excellent stability with respect to a lithium metal and excellent ion conductivity while having high crystallinity even when heat-treated at a low temperature.
The present invention has an advantage in that the possibility of sulfur vacancy due to heat treatment during manufacturing is low, and therefore, there is no need to use $H_2S$ gas used to prevent sulfur vacancy.

[Best Mode for Carrying Out the Invention]

Now, the present invention will be described in more detail to help understand the present invention. Terms or words used in the specification and the following claims shall not be limited to common or dictionary meanings, and have meanings and concepts corresponding to technical aspects of the embodiments of the present invention so as to most suitably express the embodiments of the present invention.
A crystalline sulfide-based solid electrolyte is prepared using a composition including $Li_2S$, $P_2S_5$ and halogenated compounds (LiCl, LiBr, LiI, LiF, etc.). Here, halogen, which is a monovalent anion, is weaker in attracting Li ions than S, which is a divalent anion, so the density of Li ions around a crystal structure lattice is reduced, so Li ions move relatively easily. Lithium-ion conductivity may be improved by increasing the amount of halogen occupying the crystalline lattice of a crystalline sulfide-based solid electrolyte using a method of utilizing such Li ion mobility characteristics.
A sulfur content in a solid electrolyte decreases as much as a halogen compound is increased through substitution or addition, and sulfur vacancy occurs due to heat applied during the manufacturing process of a solid electrolyte, whereby the electronic conductivity in a solid electrolyte increases, resulting in a short circuit inside a battery.

That is, when a halogen content is increased to increase the ionic conductivity of a sulfide-based solid electrolyte, a sulfur content is reduced, resulting in sulfur vacancy, which increases electronic conductivity. However, if the electronic conductivity is high, the inside of a cell may be short-circuited. Therefore, the present inventors developed a sulfide-based solid electrolyte with high ionic conductivity but low electronic conductivity so that a battery can be stably operated.

On the other hand, a related technology tried to prevent sulfur deficiency by introducing $H_2S$ gas in a heat treatment process for producing a solid electrolyte, but when using $H_2S$ gas, there is a problem that safety measures such as a neutralization treatment system should be added.

Accordingly, the present inventors aimed to minimize sulfur vacancy in a sulfide-based solid electrolyte by minimizing the addition of a halogen compound and to provide a sulfide-based solid electrolyte that can be heat-treated without introducing $H_2S$ gas at a relatively low temperature of 450 or more and less than 500 °C and has high lithium ion conductivity.

The present invention provides a sulfide-based solid electrolyte prepared through heat treatment without addition of $H_2S$ gas at a relatively low temperature of 450 to 500°C, wherein the sulfide-based solid electrolyte includes lithium element (Li), sulfur element (S), phosphorus element (P) and halogen element (X), wherein the halogen element (X) includes chlorine element (Cl) and at least one halogen, other than chlorine, selected from the group consisting of fluorine element (F), bromine element (Br), iodine element (I) and combinations thereof. Here, a molar ratio (Li/P) of lithium element (Li) to phosphorus element (P) is 5 or more and less than 6.2, the sum of a molar ratio (S/P) of sulfur element (S) to phosphorus element (P) and a molar ratio (X/P) of halogen element (X) to phosphorus element (P) is 6 to 6.5, preferably 6 to 6.2, and a molar ratio (X/S) of halogen element (X) to sulfur element (S) is 0.25 to 0.30.

The sulfide-based solid electrolyte of the present invention includes preferably chlorine and iodine as halogens and may further include fluorine or bromine. When the sulfide-based solid electrolyte of the present invention includes iodine, a crystallization temperature may be lowered. In addition, the present invention is advantageous in that sufficient ionic conductivity is exhibited when a molar ratio (Cl/P) of chlorine to phosphorus element (P) to a molar ratio (X/P) of halogen to phosphorus element (P) is 0.85 to 0.98.

In the solid electrolyte of the present invention, a molar ratio (X/S) of halogen element (X) to sulfur element (S) is 0.25 to 0.30, so halogen is included in a relatively small amount. Accordingly, a solid electrolyte having high crystallinity and excellent ionic conductivity may be provided even when heat-treated at a relatively low temperature. In addition, since the LiS content in the solid electrolyte of the present invention is relatively high, there is no risk of sulfur loss during firing and, accordingly, there is no need to use $H_2S$ gas, etc. during manufacturing. The solid electrolyte of the present invention has the advantage that sulfur vacancy does not occur even when $H_2S$ gas is not used and as a result, the electronic conductivity of a solid electrolyte is low. Accordingly, there is less short circuit inside a battery. The sulfide-based solid electrolyte of the present invention is characterized by having an electronic conductivity of $1.4 \times 10^{-5}$ mS/cm or less.

In the sulfide-based solid electrolyte of the present invention, a molar ratio (X/S) of halogen element (X) to sulfur element (S) may be 0.265 to 0.275.

In an embodiment of the present invention, the sulfide-based solid electrolyte may be a compound represented by Formula (1) below:

Formula (1)  $Li_{7-x-y}PS_{6-x}X_{x+y}$

In the formula,
X is Cl and at least one halogen, other than Cl, selected from the group consisting of F, Br, I and combinations thereof,

$$0.8 \leq x \leq 1.5,$$

$$0 < y \leq 0.5,$$

and

$$(x+y)/(6-x) \text{ is } 0.25 \text{ to } 0.30.$$

According to an embodiment of the present invention, a sulfide-based solid electrolyte wherein (x+y)/(6-x) is 0.265 or more and less than 0.3 may be provided.

According to an embodiment of the present invention, a sulfide-based solid electrolyte wherein a molar ratio (X/P) of halogen to phosphorus element (P) is 1.2 to 1.4 may be provided.

In an embodiment of the present invention, the solid electrolyte of the present invention may include the sulfide-based compound of the present invention and may further include other materials or components.

That is, the solid electrolyte may consist of a single phase composed of a crystal phase of a cubic argyrodite-type crystal structure or may consist of a mixed phase containing a crystal phase of a cubic argyrodite-type crystal structure and a crystal phase represented by LiX (X is halogen).

In addition, the other materials may contain a crystal phase represented by $Li_2S$.

That is, the solid electrolyte of the present invention may be composed of the solid electrolyte of the present invention alone, and the content of the solid electrolyte of the present invention may be 50% by mass or more, preferably 80% by mass or more, more preferably 90% by mass or more of the total electrolyte.

In addition, the solid electrolyte of the present invention may also include unavoidable impurities in an amount of, for example, less than 5% by mass, especially less than 3% by mass which have a little adverse effect on the present invention, in addition to the above materials.

A method of preparing the sulfide-based solid electrolyte of the present invention includes:

a) a step of mixing a raw material including a lithium-containing compound, a phosphorus-containing compound, and a halogen element-containing compound while pulverizing the raw material; and
b) a step of heat-treating a pulverized product, obtained by the step a), at a temperature of 450°C or higher and lower than 500°C under a vacuum or inert atmosphere.

Examples of the lithium (Li)-containing compound include lithium compounds such as lithium sulfide ($Li_2S$), lithium oxide ($Li_2O$) and lithium carbonate ($Li_2CO_3$), lithium metal groups, and the like.

Examples of the phosphorus (P)-containing compound include phosphorus compounds and groups such as phosphorus sulfides such as diphosphorus trisulfide ($P_2S_3$) and diphosphorus pentasulfide ($P_2S_5$), and the like.

Examples of the sulfur (S)-containing compound include the lithium sulfide or phosphorus sulfide.

The halogen may include fluorine or bromine together with chlorine and iodine.

Examples of the chlorine-containing compound include LiCl, $PCl_3$, $PCl_5$, $P_2Cl_4$, $SCl_2$, $S_2Cl_2$, NaCl, $BCl_3$, and the like.

Examples of the bromine-containing compound include LiBr, $PBr_3$, $S_2Br_2$, NaBr, $BBr_3$, and the like.

Examples of the iodine-containing compound include LiI, $PI_3$, $GeI_4$, and the like.

Thereamong, a combination of lithium sulfide, phosphorus sulfide, lithium chloride, and lithium bromide or lithium iodide is preferable.

In the preparation method of the present invention, it is preferable to mix raw materials by means of, for example, a ball mill, a bead mill, a homogenizer, or the like.

In addition, since the raw materials are very unstable in the air, react with moisture to be decomposed and generate hydrogen sulfide gas or are oxidized, it is preferable to set and fire the raw materials in a furnace in an inert gas atmosphere chamber or the like.

The present invention provides an all-solid lithium secondary battery including the sulfide-based solid electrolyte of the present invention. That is, the sulfide-based solid electrolyte of the present invention may be used as a solid electrolyte layer of an all-solid lithium secondary battery, a solid electrolyte mixed with a positive/negative electrode mixture, or the like.

In an embodiment, an all-solid lithium secondary battery may be constituted by forming a layer including a positive electrode, a negative electrode and the solid electrolyte formed between the positive electrode and the negative electrode.

The solid electrolyte of the present invention has excellent stability with respect to a lithium metal and excellent ion conductivity while having high crystallinity, so a stable and efficient all-solid-state lithium secondary battery can be provided.

Here, the layer including the solid electrolyte may be manufactured, for example, by a method of dropping a slurry composed of a solid electrolyte, a binder and a solvent onto a substrate and cutting the same by rubbing with a doctor blade or the like, a method of cutting with an air knife after contacting gas and slurry, a method of forming a coating film by a screen printing method or the like, and then removing a solvent through ustulation, or the like. Alternatively, a powder of a solid electrolyte was made into a green compact by pressing, etc., and then processed to produce a layer.

As a positive electrode material of the all-solid lithium secondary battery of the present invention, a positive electrode material used as a positive electrode active material of a lithium secondary battery may be used without limitation. Examples of the positive electrode active material include a spinel-type lithium transition metal oxide, a lithium transition metal oxide having a layered structure, olivine, and a mixture of two or more thereof.

As a negative electrode material of the all-solid lithium secondary battery of the present invention, a negative electrode material used as a negative electrode active material of a lithium secondary battery may be used without limitation. Examples of the negative electrode active material include carbon-based materials such as artificial graphite, natural graphite, and non-graphitizable carbon (hard carbon). Therefore, the energy density of the all-solid-state lithium secondary battery may be greatly improved by using a carbon-based material as a negative electrode active material together with the solid electrolyte of the present invention as an electrolyte of a lithium secondary battery. In addition, a silicon active material, which is a high-capacity negative electrode material, may be used as the negative electrode active material.

[Mode for Carrying Out the Invention]

Hereinafter, the present invention will be described with an example of the present invention. However, the present invention is not limited thereto, and in describing the present invention, descriptions of functions or components that are already known will be omitted to clarify the gist of the present invention.

[Comparative Example 1] Preparation of sulfide-based solid electrolyte including chlorine

38.8 g of lithium sulfide ($Li_2S$) powder, 41.5 g of diphosphorus pentasulfide ($P_2S_5$) powder and 19.7 g of lithium chloride (LiCl) powder were weighed and pulverized and mixed to prepare a mixed powder. The mixed powder was filled in a container and fired in an electric furnace under argon gas at a firing temperature of 450°C for 10 hours. Next, a sample was collected to obtain an argyrodite crystalline sulfide-based compound as a powdery solid electrolyte.

All the weighing, the mixing, the heat treatment in an electric furnace, and extraction were conducted under sufficiently dry Ar gas. The composition, lithium ion conductivity and electronic conductivity characteristics of the obtained solid electrolyte are shown in Table 1 below.

[Example 1] Preparation of sulfide-based solid electrolyte including chlorine and iodine

A sulfide-based solid electrolyte of an argyrodite-type crystal structure was obtained in the same manner as in Comparative Example 1 except that 37.63 g of lithium sulfide ($Li_2S$) powder, 41.00 g of diphosphorus pentasulfide ($P_2S_5$) powder, 19.39 g of lithium chloride (LiCl) powder and 1.98 g of lithium iodide (LiI) powder were used. The composition, lithium ion conductivity and electronic conductivity characteristics of the obtained solid electrolyte are shown in Table 1 below.

[Example 2] Preparation of sulfide-based solid electrolyte including chlorine and bromine

A sulfide-based solid electrolyte of an argyrodite-type crystal structure was obtained in the same manner as in Comparative Example 1 except that 36.09 g of lithium sulfide ($Li_2S$) powder, 40.79 g of diphosphorus pentasulfide ($P_2S_5$) powder, 19.29 g of lithium chloride (LiCl) powder and 3.82 g of lithium bromide (LiBr) powder were used. The composition, lithium ion conductivity and electronic conductivity characteristics of the obtained solid electrolyte are shown in Table 1 below.

[Example 3] Preparation of sulfide-based solid electrolyte including chlorine, bromine and iodine

A sulfide-based solid electrolyte of an argyrodite-type crystal structure was obtained in the same manner as in Comparative Example 1 except that 34.97 g of lithium sulfide ($Li_2S$) powder, 40.27 g of diphosphorus pentasulfide ($P_2S_5$) powder, 19.05 g of lithium chloride (LiCl) powder, 3.78 g of lithium bromide (LiBr) and 1.94 g of lithium iodide (LiI) powder were used. The composition, lithium ion conductivity and electronic conductivity characteristics of the obtained solid electrolyte are shown in Table 1 below.

[Comparative Example 2]

The lithium ion conductivity and electronic conductivity obtained using a commercially available $Li_2S$-$P_2S_5$-LiCl-based solid electrolyte ($Li_{6-x}PS_{5-x}Cl_{1+x}$) manufactured by company A are shown in Table 1.

[Comparative Example 3]

The lithium ion conductivity and electronic conductivity obtained using a commercially available $Li_2S$-$P_2S_5$-LiCl-based solid electrolyte ($Li_{6-x}PS_{5-x}Cl_{1+x}$) manufactured by company B are shown in Table 1.

[Table 1]

| | Comparative Example 1 | Example 1 | Example 2 | Example 3 | Comparative Example 2 | Comparative Example 3 |
|---|---|---|---|---|---|---|
| | (ref.) $Li_{5.76}PS_{4.76}Cl1.24$ | (ref. + LiI 0.04 mol%) $Li_{5.80}PS_{4.76}Cl_{1.24}I_{0.04}$ | (ref. + LiBr 0.12 mol%) $Li_{5.88}PS_{4.76}Cl_{1.24}Br_{0.12}$ | (ref. + LiI 0.04 mol% + LiBr 0.12 mol%) $Li_{5.92}PS_{4.76}Cl_{1.24}I_{0.04}Br_{0.12}$ | $Li_{6-x}PS_{5-x}Cl_{1+x}$ | $Li_{6-x}PS_{5-x}Cl_{1+x}$ |
| Li2S (wt%) | 38.81 | 37.63 | 36.09 | 34.97 | Solid electrolyte of company A | Solid electrolyte of company B |
| P2S5 (wt%) | 41.54 | 41.00 | 40.79 | 40.27 | | |
| LiCl (wt%) | 19.65 | 19.39 | 19.29 | 19.05 | | |
| LiI (wt%) | | 1.98 | | 1.94 | | |
| LiBr (wt%) | | | 3.82 | 3.78 | | |
| Li ion conductivity (mS/cm) | 3.69 | 3.91 | 4.06 | 4.20 | 1.20 | 4.76 |
| electronic conductivity (mS/cm) | $1.36\times10^{-5}$ | $1.15\times10^{-5}$ | $1.03\times10^{-5}$ | $9.3\times10^{-6}$ | $1.41\times10^{-5}$ | $3.40\times10^{-5}$ |

[Experimental example]

The current values and electronic conductivities measured at 1V of the solid electrolytes of Examples 1 to 3 and Comparative Examples 1 to 3 are shown in Table 2.

```
Electronic conductivity = (current value at 1V x solid

electrolyte thickness) / solid electrolyte area
```

[Table 2]

|  | Comparati ve Example 1 | Exampl e 1 | Exampl e 2 | Exampl e 3 | Comparati ve Example 2 | Comparati ve Example 3 |
|---|---|---|---|---|---|---|
| Measured current | 76nA | 65nA | 58nA | 53nA | 80nA | 192nA |
| Solid electrolyt e thickness | 0.235cm | 0.235c m | 0.235c m | 0.234c m | 0.234cm | 0.235cm |
| Solid electrolyt e area | 1.327cm2 | 1.327c m2 | 1.327c m2 | 1.327c m2 | 1.327cm2 | 1.327cm2 |
| Electronic conductivi ty (mS/cm) | 1.36x10-5 | $1.15 \times 10$-5 | $1.03 \times 10$-5 | 9.3x10 -6 | 1.41x10-5 | 3.40x10-5 |

The $Li_2S$-$P_2S_5$-MCl-MX'-based sulfide-based solid electrolyte of the present invention has excellent lithium ion conductivity of 3.9 mS/cm or more and a low electronic conductivity of $1.4 \times 10^{-5}$ mS/cm or less.

[Industrial Applicability]

A $Li_2S$-$P_2S_5$-MCl-MX'-based sulfide-based solid electrolyte of the present invention has excellent lithium ion conductivity and low electronic conductivity, so it can be used as an electrolyte for all-solid lithium secondary batteries.

**Claims**

1. A sulfide-based solid electrolyte, wherein the sulfide-based solid electrolyte is a $Li_2S$-$P_2S_5$-MCl-MX' (X' is a halogen other than Cl)-based sulfide-based solid electrolyte and has an argyrodite-type crystal structure,

    wherein a molar ratio (Li/P) of lithium element (Li) to phosphorus element (P) is 5 or more and less than 6.2, a sum of a molar ratio (S/P) of sulfur element (S) to phosphorus element (P) and a molar ratio (X/P) of halogen element (X) to phosphorus element (P) is 6 to 6.5, and
    a molar ratio (X/S) of halogen element (X) to sulfur element (S) is 0.25 to 0.30.

2. The sulfide-based solid electrolyte according to claim 1, wherein chlorine and iodine are comprised as halogens.

3. The sulfide-based solid electrolyte according to claim 1, wherein a sum of the molar ratio (S/P) of sulfur element (S) to phosphorus element (P) and the molar ratio (X/P) of halogen element (X) to phosphorus element (P) is 6 to 6.2.

4. The sulfide-based solid electrolyte according to claim 1, wherein the sulfide-based solid electrolyte is a compound represented by Formula (1) below:

    Formula (1)        $Li_{7-x-y}PS_{6-x}X_{x+y}$

    where X is Cl and at least one halogen, other than Cl, selected from the group consisting of F, Br, I and combinations thereof,

$$0.8 \leq x \leq 1.5, \; 0 < y \leq 0.5,$$

and

$$(x+y)/(6-x) \text{ is } 0.25 \text{ to } 0.30.$$

5. The sulfide-based solid electrolyte according to claim 4, wherein a molar ratio (Cl/P) of chlorine to phosphorus element (P) to a molar ratio (X/P) of halogen to phosphorus element (P) is 0.85 to 0.98.

6. The sulfide-based solid electrolyte according to claim 4, wherein a molar ratio (X/P) of halogen to phosphorus element (P) is 1.2 to 1.4.

7. The sulfide-based solid electrolyte according to claim 4, wherein (x+y)/(6-x) is 0.265 or more and less than 0.3.

8. A method of preparing a sulfide-based solid electrolyte, the method comprising:

   a) mixing a raw material comprising a lithium-containing compound, a phosphorus-containing compound, a chlorine-containing compound and an iodine-containing compound while pulverizing the raw material; and
   b) heat-treating a pulverized product, obtained by the mixing, at a temperature of 450°C or higher and lower than 500°C under a vacuum or inert atmosphere.

9. The method according to claim 8, wherein the raw material further comprises a bromine-containing compound.

10. The method according to claim 8, wherein the sulfide-based solid electrolyte is a $Li_2S$-$P_2S_5$-MCl-MX' (X' is a halogen other than Cl)-based sulfide-based solid electrolyte and has an argyrodite-type crystal structure,

   wherein a molar ratio (Li/P) of lithium element (Li) to phosphorus element (P) is 5 or more and less than 6.2,
   a sum of a molar ratio (S/P) of sulfur element (S) to phosphorus element (P) and a molar ratio (X/P) of halogen element (X) to phosphorus element (P) is 6 to 6.5, and
   a molar ratio (X/S) of halogen element (X) to sulfur element (S) is 0.25 to 0.30.

11. The method according to claim 8, wherein the sulfide-based solid electrolyte is a compound represented by Formula (1) below:

   Formula (1) $\qquad Li_{7-x-y}PS_{6-x}X_{x+y}$

   where X is Cl and at least one halogen, other than Cl, selected from the group consisting of F, Br, I and combinations thereof,

$$0.8 \leq x \leq 1.5, \; 0 < y \leq 0.5,$$

and

$$(x+y)/(6-x) \text{ is } 0.25 \text{ to } 0.30.$$

12. An all-solid lithium secondary battery, comprising the sulfide-based solid electrolyte of claim 1 or a sulfide-based solid electrolyte prepared by the method of claim 8.

**INTERNATIONAL SEARCH REPORT**

| International application No. |
| --- |
| **PCT/KR2021/013256** |

| **A. CLASSIFICATION OF SUBJECT MATTER** |
| --- |
| **H01M 10/0562**(2010.01)i; **H01M 10/052**(2010.01)i; **C01B 25/14**(2006.01)i |
| According to International Patent Classification (IPC) or to both national classification and IPC |

| **B. FIELDS SEARCHED** |
| --- |
| Minimum documentation searched (classification system followed by classification symbols)<br>H01M 10/0562(2010.01); H01M 10/052(2010.01); H01M 10/0525(2010.01); H01M 4/36(2006.01); H01M 4/62(2006.01) |
| Documentation searched other than minimum documentation to the extent that such documents are included in the fields searched<br>Korean utility models and applications for utility models: IPC as above<br>Japanese utility models and applications for utility models: IPC as above |
| Electronic data base consulted during the international search (name of data base and, where practicable, search terms used)<br>eKOMPASS (KIPO internal) & keywords: 황화물계 고체 전해질(sulfide solid electrolyte), 인(P), 황(S), 할로겐(halogen), 아지로다이트형(argirodite type) |

| **C. DOCUMENTS CONSIDERED TO BE RELEVANT** | | |
| --- | --- | --- |
| Category* | Citation of document, with indication, where appropriate, of the relevant passages | Relevant to claim No. |
| X | KR 10-2019-0051962 A (IDEMITSU KOSAN CO., LTD.) 15 May 2019 (2019-05-15)<br>See claims 1, 8 and 9; and paragraphs [0003], [0084], [0087], [0089]-[0095], [0097], [0098] and [0201]. | 1-12 |
| A | KR 10-1723331 B1 (TOYOTA JIDOSHA KABUSHIKI KAISHA) 04 April 2017 (2017-04-04)<br>See claims 1-9; and paragraphs [0007] and [0109]. | 1-12 |
| A | KR 10-2020-0110810 A (MITSUI MINING & SMELTING CO., LTD.) 25 September 2020 (2020-09-25)<br>See claims 1-8. | 1-12 |
| A | JP 2012-048971 A (TOYOTA MOTOR CORP.) 08 March 2012 (2012-03-08)<br>See claims 1-13. | 1-12 |
| A | KR 10-2020-0108487 A (MITSUI MINING & SMELTING CO., LTD.) 18 September 2020 (2020-09-18)<br>See claims 1-7. | 1-12 |

| ☐ Further documents are listed in the continuation of Box C. | ☑ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **24 January 2022** | **24 January 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2021/013256**

| Patent document cited in search report | | | Publication date (day/month/year) | Patent family member(s) | | | Publication date (day/month/year) |
|---|---|---|---|---|---|---|---|
| KR | 10-2019-0051962 | A | 15 May 2019 | CN | 109690696 | A | 26 April 2019 |
| | | | | CN | 109690696 | B | 20 October 2020 |
| | | | | CN | 109690697 | A | 26 April 2019 |
| | | | | CN | 109690697 | B | 05 January 2021 |
| | | | | CN | 112652810 | A | 13 April 2021 |
| | | | | EP | 3511948 | A1 | 17 July 2019 |
| | | | | EP | 3511948 | B1 | 12 May 2021 |
| | | | | EP | 3511949 | A1 | 17 July 2019 |
| | | | | EP | 3511949 | B1 | 19 May 2021 |
| | | | | EP | 3905278 | A1 | 03 November 2021 |
| | | | | JP | 2020-102460 | A | 02 July 2020 |
| | | | | JP | 2021-122029 | A | 26 August 2021 |
| | | | | JP | 6679736 | B2 | 15 April 2020 |
| | | | | JP | 6679737 | B2 | 15 April 2020 |
| | | | | KR | 10-2019-0058467 | A | 29 May 2019 |
| | | | | KR | 10-2021-0044905 | A | 23 April 2021 |
| | | | | KR | 10-2242073 | B1 | 19 April 2021 |
| | | | | KR | 10-2320308 | B1 | 01 November 2021 |
| | | | | TW | 201817074 | A | 01 May 2018 |
| | | | | TW | 201817075 | A | 01 May 2018 |
| | | | | US | 10374253 | B2 | 06 August 2019 |
| | | | | US | 10483587 | B2 | 19 November 2019 |
| | | | | US | 10879561 | B2 | 29 December 2020 |
| | | | | US | 2019-0140313 | A1 | 09 May 2019 |
| | | | | US | 2019-0140314 | A1 | 09 May 2019 |
| | | | | US | 2019-0305371 | A1 | 03 October 2019 |
| | | | | US | 2021-0075057 | A1 | 11 March 2021 |
| | | | | WO | 2018-047565 | A1 | 15 March 2018 |
| | | | | WO | 2018-047566 | A1 | 15 March 2018 |
| KR | 10-1723331 | B1 | 04 April 2017 | CN | 105324878 | A | 10 February 2016 |
| | | | | CN | 105324878 | B | 30 June 2017 |
| | | | | EP | 3016198 | A1 | 04 May 2016 |
| | | | | EP | 3016198 | B1 | 16 May 2018 |
| | | | | JP | 2015-011901 | A | 19 January 2015 |
| | | | | JP | 6003831 | B2 | 05 October 2016 |
| | | | | KR | 10-2016-0010555 | A | 27 January 2016 |
| | | | | US | 1011775 | B2 | 18 May 2021 |
| | | | | US | 2016-0149259 | A1 | 26 May 2016 |
| | | | | WO | 2014-208239 | A1 | 31 December 2014 |
| KR | 10-2020-0110810 | A | 25 September 2020 | CN | 112020477 | A | 01 December 2020 |
| | | | | EP | 3766832 | A1 | 20 January 2021 |
| | | | | JP | 6703216 | B1 | 03 June 2020 |
| | | | | WO | 2020-095937 | A1 | 14 May 2020 |
| JP | 2012-048971 | A | 08 March 2012 | CN | 103125044 | A | 29 May 2013 |
| | | | | CN | 103125044 | B | 14 September 2016 |
| | | | | EP | 2609652 | A2 | 03 July 2013 |
| | | | | EP | 2609652 | B1 | 24 June 2015 |
| | | | | JP | 5349427 | B2 | 20 November 2013 |
| | | | | KR | 10-1484424 | B1 | 19 January 2015 |
| | | | | KR | 10-2013-0069738 | A | 26 June 2013 |

Form PCT/ISA/210 (patent family annex) (July 2019)

**INTERNATIONAL SEARCH REPORT**
Information on patent family members

International application No.

**PCT/KR2021/013256**

| Patent document cited in search report | | | Publication date (day/month/year) | Patent family member(s) | | | Publication date (day/month/year) |
|---|---|---|---|---|---|---|---|
| | | | | US | 2013-0177821 | A1 | 11 July 2013 |
| | | | | US | 9680179 | B2 | 13 June 2017 |
| | | | | WO | 2012-026561 | A2 | 01 March 2012 |
| | | | | WO | 2012-026561 | A3 | 18 May 2012 |
| KR | 10-2020-0108487 | A | 18 September 2020 | CN | 112203975 | A | 08 January 2021 |
| | | | | CN | 112203975 | B | 23 July 2021 |
| | | | | EP | 3763671 | A1 | 13 January 2021 |
| | | | | JP | 6738983 | B1 | 12 August 2020 |
| | | | | US | 11108084 | B2 | 31 August 2021 |
| | | | | US | 2021-0028486 | A1 | 28 January 2021 |
| | | | | WO | 2020-095936 | A1 | 14 May 2020 |

Form PCT/ISA/210 (patent family annex) (July 2019)